# FASCICULE DE BREVET EUROPEEN

(11) **EP 0 925 907 B1**
(45) Date de publication et mention de la délivrance du brevet: **02.07.2003**
(21) Numéro de dépôt: 98123100.4
(22) Date de dépôt: 11.12.1998
(51) Int. Cl.: B29D 30/52, B29C 33/48

(54) **Procédé et élément moulant pour mouler une découpure dans une bande de roulement de pneumatique**
Verfahren zum Formen eines Ausschnittes in einer Reifenlauffläche und dabei verwendetes Formwerkzeug
Process for moulding a cutout in a tyre tread and moulding element therefore

(30) Priorité: 24.12.1997 FR 9716649
(43) Date de publication de la demande: 30.06.1999
(73) Titulaire: Compagnie Générale des Etablissements MICHELIN-MICHELIN & CIE, 63040 Clermont-Ferrand Cedex 09 (FR)
(72) Inventeur: Merino Lopez, Jose, 63200 Riom (FR)
(74) Mandataire: Diernaz, Christian

(56) Documents cités:
- EP-A- 0 342 908
- DE-A- 4 130 143
- US-A- 1 733 064
- US-A- 2 661 041

## Description

L'invention concerne un procédé pour mouler dans une bande de gomme un motif de découpure dont les parois sont reliées par au moins un élément de liaison en gomme ainsi qu'un élément moulant équipant un moule de fabrication des bandes de roulement pour pneumatiques neufs ou rénovés pour mettre en oeuvre un tel procédé.

Par découpure, on entend tout évidement réalisé dans une bande de gomme et délimité par au moins deux parois principales de gomme se faisant face, lesdites parois étant séparées d'une distance moyenne représentant la largeur de la découpure, l'intersection de chacune desdites parois avec la surface de roulement formant une arête de gomme.

Par élément de liaison, on entend une partie en gomme formant, à l'état neuf, un pont reliant de manière permanente les parois principales d'une découpure de façon à maintenir une rigidité suffisante à la bande de roulement pourvue de ladite découpure.

Dans la demande de brevet français publiée sous le numéro **FR 2 759 323,** la demanderesse a décrit une sculpture d'une bande de roulement pour pneumatique comportant une pluralité de découpures ayant au moins un élément de liaison reliant mécaniquement deux parois principales. De cette façon, il est possible d'avoir un grand nombre de découpures sur l'ensemble de la bande de roulement et par conséquent un grand nombre d'arêtes de gomme assurant une bonne performance sur sol mouillé sans qu'il en résulte pour autant une diminution trop sensible de la rigidité de la bande de roulement.

Dans cette demande de brevet, il est de plus décrit un procédé pour réaliser une telle découpure selon lequel on insère dans la bande de gomme non vulcanisée un intercalaire pourvu d'un ou plusieurs orifices destinés à laisser passer la gomme pendant le moulage et la vulcanisation de ladite bande pour former le ou les éléments de liaison. Cet intercalaire est réalisé dans un matériau adapté pour résister aux contraintes de moulage et ayant en outre la propriété de s'éliminer progressivement pendant le roulage du pneumatique. Dans le cas d'espèce, la découpure ainsi formée reste quasiment totalement remplie par l'intercalaire ce qui réduit d'autant sa capacité de drainage et de réservoir lors d'un roulage sur sol mouillé.

Il est bien sûr possible d'enlever en partie ou totalement l'intercalaire après moulage et vulcanisation de ladite bande, mais cela ajoute alors une opération dans le cycle de fabrication.

Dans une deuxième demande de brevet française publiée sous le numéro **FR 2 759 321,** la demanderesse a proposé un autre procédé d'obtention d'une bande de roulement pour pneumatique pourvue d'une sculpture comportant des découpures ayant au moins un élément de liaison. Ce procédé consiste à employer un moule formé de deux parties, la première partie moulant la surface externe de la bande de roulement correspondant à sa surface de roulement et la seconde partie moulant la surface interne de ladite bande, lesdites deux parties délimitant dans la position de moulage un volume correspondant à celui de ladite bande. En outre, chaque partie du moule est pourvue d'au moins un élément moulant faisant saillie à sa surface de moulage et destiné à venir partiellement en contact avec un élément moulant porté par l'autre partie de moule pour mouler une découpure traversant totalement la bande de roulement dans son épaisseur. Le contact partiel entre les éléments moulants en contact forme au moins un orifice pour mouler au moins un pont de gomme reliant mécaniquement les parois de la découpure ainsi moulée.

Ce deuxième procédé, permettant un démoulage aisé de la bande après moulage et vulcanisation, impose toutefois que les éléments de liaison soient situés au niveau des zones de contact entre les éléments moulants de la partie supérieure du moule avec les éléments moulants de la partie inférieure.

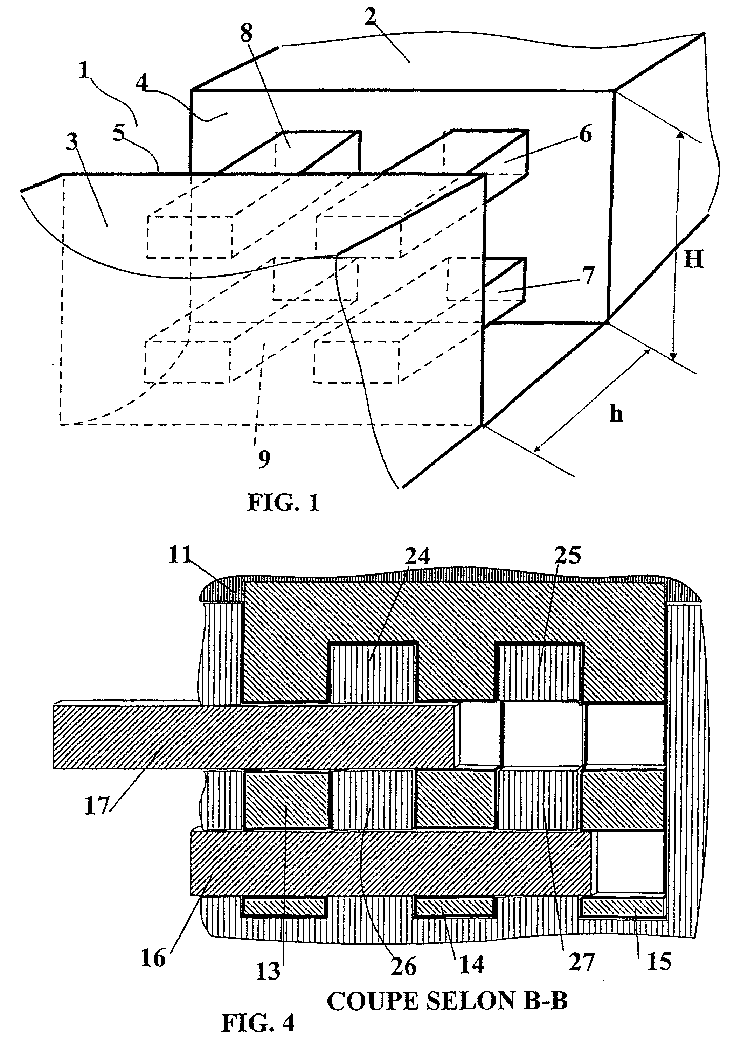

La figure **1**, montrant partiellement deux blocs de gomme **2** et **3** séparés par une incision 1 (c'est-à-dire une découpure de faible largeur) et reliés par quatre éléments de liaison **6**, **7**, **8**, **9**, illustre un exemple particulier de disposition desdits éléments de liaison qu'il n'est pas possible de réaliser selon le procédé décrit dans la demande de brevet française publiée sous le numéro **FR 2 759 321**,pour la simple raison que les éléments de liaison sont deux à deux situés l'un au dessus de l'autre dans le sens de l'épaisseur de la bande c'est-à-dire suivant une direction sensiblement perpendiculaire à la surface de roulement de ladite bande. En outre, ce procédé ne permet pas la réalisation directe d'un pneumatique pourvu d'une bande de roulement mais il impose systématiquement une étape supplémentaire dans la fabrication d'un pneumatique. En effet, après fabrication d'une bande dans un moule en deux parties, il est ensuite nécessaire de rapporter et de coller ladite bande prémoulée sur une ébauche de pneumatique avant moulage et vulcanisation définitive dudit pneumatique dans le cas de la fabrication d'un pneumatique neuf.

Tous les autres procédés connus employant au moins un lément moulant (notamment sous la forme d'une lamelle mince) ne permettent pas la réalisation de découpure ayant au moins un élément de liaison dont les intersections avec les parois de ladite découpure présentent des contours dont tous les points sont situés à une distance strictement plus grande que zéro par rapport au fond de l'incision de manière à ce que la continuité du volume de la découpure soit conservée. En effet, tout élément de liaison formé pendant le moulage et présentant de telles caractéristiques est rompu pendant le démoulage, l'élément moulant sectionnant ledit pont de gomme pendant cette phase.

L'objectif de la présente invention est de proposer un procédé de moulage employant un nouvel élément moulant destiné à réaliser, dans une bande de gomme, une découpure pourvue d'au moins un élément de liaison en gomme reliant deux des parois principales de ladite découpure, ledit procédé ne présentant pas les inconvénients des procédés décrits auparavant. Un élément moulant selon l'invention permet, par exemple, de réaliser une découpure pourvue d'éléments de liaison disposés comme cela est représenté sur la figure **1.**

Le procédé de l'invention consiste à employer un moule de moulage d'une bande de roulement, ledit moule comportant plusieurs pièces de moule, chaque pièce de moule pouvant être animée d'un mouvement de fermeture et d'ouverture selon une direction propre sensiblement perpendiculaire à la surface de moulage de ladite pièce de moule et l'une au moins desdites pièces de moule comprenant au moins un élément moulant faisant saillie à la surface de moulage de ladite pièce de moule, ledit élément moulant comportant au moins un orifice pour mouler au moins un élément de liaison, le procédé de l'invention comprenant les étapes suivantes :
- on réalise l'élément moulant en au moins deux parties distinctes, une partie formant le support dudit élément et au moins une autre partie formant une clé du même élément;
- on positionne et on fixe la partie formant le support de l'élément moulant sur une pièce du moule de moulage du pneumatique de façon à ce que ledit support fasse saillie sur la surface de moulage de ladite pièce de moule;
- on constitue l'élément moulant dans la configuration de moulage en assemblant chaque clé avec le support dudit élément;
- on ferme le moule en déplaçant chaque pièce de moule selon sa direction de fermeture;
- on moule alors la bande de gomme (pour obtenir une forme reproduisant la forme du moule);
- on dégage chaque clé du support de l'élément moulant pour permettre le démoulage de l'élément moulant;
- on extrait le support de l'élément moulant hors de la bande moulée en déplaçant chaque pièce de moule selon sa propre direction d'ouverture opposée à la direction de fermeture.

Un mode préférentiel pour désassembler les clés consiste à prévoir des moyens pour que chaque clé puisse être déplacée par rapport au support avec lequel elle est assemblée dans une direction différente de la direction de fermeture/ouverture de la pièce de moule portant ledit élément; en pratique ce mouvement des clés peut se faire dans une direction qui est sensiblement perpendiculaire à ladite direction de fermeture/ouverture.

Une variante possible du procédé, décrit ci-dessus, consiste à inverser l'ordre des étapes trois et quatre, c'est-à-dire à fermer le moule avant de constituer chaque élément moulant dans sa configuration de moulage par assemblage de chaque clé avec le support de chaque élément.

Selon un autre aspect de l'invention, il est proposé un élément moulant destiné à être monté sur une pièce de moule pour mouler une partie d'une bande de roulement d'un pneumatique et à faire saillie sur la surface de moulage de ladite pièce, ledit élément moulant étant destiné à mouler une découpure dans ladite bande, deux des parois principales de ladite découpure étant pourvue d'au moins un élément de liaison reliant lesdites parois à l'état neuf.

Cet élément moulant présente une direction longitudinale (sensiblement la direction reliant les points d'ancrage dudit élément sur le moule de moulage les plus éloignés) ainsi qu'une direction transversale (sensiblement selon une direction perpendiculaire à la direction longitudinale) et une épaisseur moyenne dans la troisième direction perpendiculaire aux deux précédentes. Cet élément moulant comporte en configuration de moulage au moins un orifice traversant ledit élément moulant de part en part suivant son épaisseur pour laisser passer le matériau constituant la bande pendant le moulage et mouler ainsi au moins un élément de liaison reliant les parois principales de la découpure.

L'élément moulant selon l'invention est constitué d'une première partie et d'une deuxième partie, ladite première partie constituant le support de l'élément moulant destinée à être fixée sur une pièce d'un moule de moulage d'une bande de gomme par des moyens appropriés pour faire saillie à la surface de moulage de ladite pièce de moule et pour suivre ladite pièce dans ses mouvements d'ouverture et de fermeture. La deuxième partie de l'élément moulant comporte une ou plusieurs pièces formant chacune une clé destinée à être assemblée avec la première partie de l'élément moulant de façon à former les orifices pour mouler des éléments de liaison reliant les parois principales de la découpure. L'élément moulant est caractérisé en ce que chaque clé dudit élément est amovible par rapport au support dudit élément moulant pour permettre, après le moulage de la découpure, le démoulage sans qu'il y ait de rupture des éléments de liaison moulés.

Par amovible, on entend essentiellement que chaque clé, délimitant partiellement au moins un orifice dans l'élément moulant, peut être dégagée du support dudit élément après moulage d'une bande de façon à ce que chaque clé ne puisse s'opposer au démoulage du support de l'élément dans le mouvement d'ouverture du moule.

Selon un mode particulier de réalisation, l'élément moulant selon l'invention est caractérisé en ce que :
- au moins un orifice de élément moulant est, vu selon une coupe longitudinale dudit élément, totalement clos par au moins deux parties distinctes dudit élément;
- au moins une clé de l'élément moulant délimite partiellement ledit orifice de manière à mouler une paroi de l'élément de liaison moulé dans ledit orifice;
- chaque clé peut être mise en place et être dégagée (ou même enlevée) de son support en la déplaçant dans une direction qui est différente de la direction d'ouverture de la pièce de moule portant le support de l'élément moulant.

Par orifice totalement clos par des parties distinctes, on entend un orifice qui, lorsque l'élément moulant pourvu dudit orifice est vu en coupe longitudinale (c'est-à-dire dans un plan de coupe incluant la direction longitudinale de l'élément et sensiblement tangent aux faces dudit élément moulant les parois principales de la découpure), est quasiment entièrement délimité, c'est-à-dire aux jeux près existant entre les parties amovibles et les parties formant support, dans sa section transversale par des pièces de moule et de l'élément moulant ou uniquement par des parties de l'élément moulant.

Avec l'élément moulant selon l'invention, on voit aisément que le mouvement de dégagement de chaque clé de son support rend possible le mouvement de démoulage de la pièce de moule portant le support dudit élément moulant sans qu'aucun élément de liaison formé ne s'y oppose et ne soit rompu par ledit élément moulant pendant ce mouvement de démoulage. Le mouvement de dégagement de chaque clé s'effectue selon une trajectoire contenue sensiblement dans une surface correspondant à la surface moyenne de l'élément moulant (ladite surface étant définie comme la surface passant à mi-distance des parois de l'élément moulant les parois principales de la découpure) et selon une direction qui peut, par exemple, être sensiblement perpendiculaire à la direction de démoulage de la pièce de moule portant ledit élément.

L'élément moulant selon l'invention offre la possibilité de réaliser une pluralité d'éléments de liaison dans une même découpure, au moins deux desdits éléments étant placés, dans la direction de la profondeur de la découpure, l'un au-dessus de l'autre (comme cela est, par exemple, montré à la figure **1**).

L'élément moulant selon l'invention peut aussi bien être employé dans un moule de pneumatique que dans un moule pour mouler une bande de roulement plate ou sous la forme d'un anneau fermé, ladite bande étant destinée à être placée par la suite sur un pneumatique en cours de fabrication ou de rénovation.

Une autre application d'une telle bande peut être la fabrication d'un ensemble roulant non pneumatique présentant une surface de roulement (comme par exemple une chenille pour véhicule à chenilles)

D'autres possibilités et avantages de l'élément moulant selon l'invention seront fournis avec la description des figures suivantes dont le but est de présenter de manière non limitative des variantes de réalisation de la présente invention :
La figure **1** montre une incision dans une bande de roulement d'un pneumatique, ladite incision comportant quatre éléments de liaison;
la figure **2** représente un élément moulant selon l'invention comportant quatre orifices pour mouler quatre éléments de liaison disposés de façon analogue à la disposition des éléments de liaison de l'incision montrée à la figure **1;**
la figure **3** montre une coupe selon **A-A** de l'élément moulant de la figure **2;**
la figure **4** montre une coupe selon **B-B** de l'élément moulant de la figure **2** dans lequel les clés sont partiellement dégagées du support après moulage d'une bande de gomme;
la figure **5** représente une autre variante d'élément moulant dont le support comporte deux parties distinctes faisant saillie à la surface du moule;
la figure **6** montre une autre variante d'élément moulant dans lequel les branches du support ont des géométries appropriées pour permettre le passage et le maintien en place de clés pour le moulage d'une bande de gomme;
la figure **7** montre une variante d'élément moulant présentant une forme ondulée dans la longueur dudit élément;
la figure **8** montre une variante d'élément moulant monté entre deux nervures faisant saillie à la surface de moulage d'un moule et permettant le dégagement d'une clé à l'intérieur d'une nervure;
la figure **9** montre une variante d'élément moulant selon l'invention dans laquelle le mouvement de dégagement d'une clé s'effectue à l'intérieur du support et se prolonge dans le moule.

La figure **1** représente une incision **1**, de faible largeur h devant l'épaisseur de la bande de roulement, délimitée par deux parois principales sensiblement planes **4**, **5** de deux blocs de gomme **2, 3** situés en vis-à-vis.

Les deux parois principales **4**, **5** de l'incision **1** sont reliées par quatre éléments de liaison **6**, **7**, **8**, **9** en gomme dont les intersections avec les parois **4**, **5** ont des formes sensiblement rectangulaires et sont situées aux sommets d'une forme sensiblement carrée.

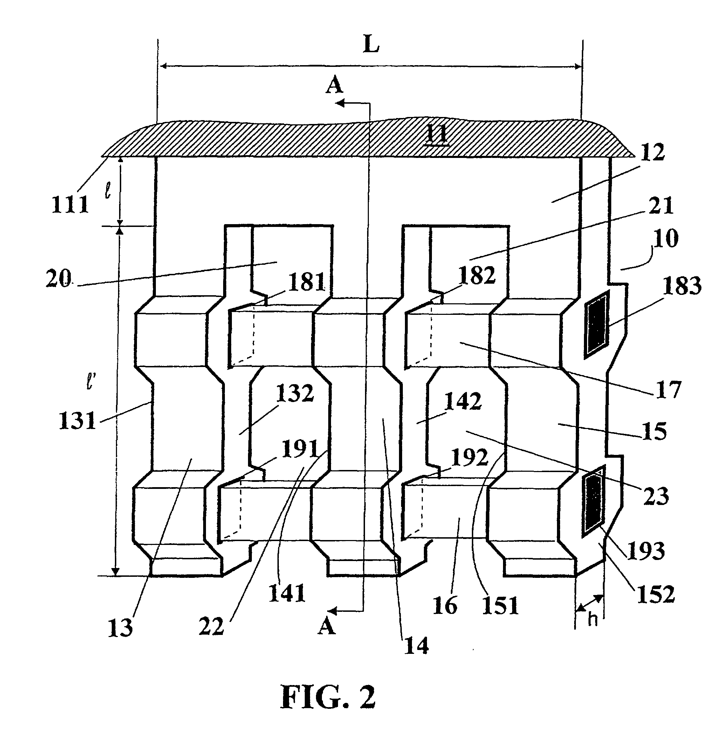

Sur la figure **2,** on a dessiné un élément moulant **10** faisant saillie sur la surface de moulage **111** d'une pièce d'un moule de vulcanisation **11** d'une bande de roulement d'un pneumatique. L'élément moulant **10** est représenté dans sa configuration de moulage et se compose de deux parties assemblées entre elles de manière à permettre le moulage dans une bande de gomme d'un motif de découpure pourvu de quatre éléments de liaison disposés de manière semblable aux éléments de liaison de l'incision représentée à la figure **1**.

Une première partie de géométrie moyenne plane forme le support **12** de l'élément **10** et est fixée au moule **11** par des moyens appropriés pour faire saillie à la surface de moulage **111** dudit moule; sur cette figure **2,** seule la partie du support faisant saillie sur la surface **111** est visible. Dans l'exemple présenté, le support **12** est sensiblement perpendiculaire à la surface de moulage **111**; il est bien sûr possible de prévoir de l'incliner d'un angle différent de **90°** par rapport à la surface de moulage **111** de manière à mouler une incision non perpendiculaire à la surface de roulement de la bande.

La partie du support **12** faisant saillie sur la surface de moulage **111**, de longueur **L**, et se compose d'une partie rectangulaire de longueur **L**, de largeur **1** et d'épaisseur **h** prolongée dans la direction transversale du support par trois branches **13, 14, 15** sensiblement de même longueur totale l' et de même largeur **d,** lesdites branches étant régulièrement espacées dans la direction longitudinale du support. Ces branches **13, 14, 15** sont disposées de manière à venir mouler les points de la découpure les plus à l'intérieur dans la direction de l'épaisseur de la bande par rapport à sa surface de roulement.La profondeur H maximale de la découpure moulée avec cet élément moulant correspond à la somme de **I** et de **I'**.

Chaque branche **13, 14, 15** est pourvue d'une face avant et d'une face arrière sensiblement parallèles entre elles, lesdites faces étant destinées à mouler des parois principales d'une découpure, et de faces latérales **131, 132, 141, 142, 151, 152** sensiblement perpendiculaires auxdites faces avant et arrière. Chaque branche comporte, à proximité de son extrémité correspondant aux points de l'élément moulant les plus éloignés de la surface de moulage du moule portant ledit élément et à une distance intermédiaire, un léger renflement formant surépaisseur: chacun desdits renflements est pourvu d'un trou constituant un passage **181**, **182**, **183**, **191**, **192**, **193**, de section sensiblement rectangulaire dans l'exemple présenté, chacun des passages traversant une branche dans toute sa largeur pour mettre en communication ses faces latérales.

La deuxième partie de l'élément moulant est constituée par deux clés **16**, **17** se présentant sous la forme de barreaux de section transversale rectangulaire et de longueur sensiblement égale à la longueur L du support **12.** Ces clés **16, 17** sont prévues pour être insérées dans les branches **13, 14, 15** du support **12** par insertion dans les passages **181, 182, 183, 191, 192, 193** de manière à constituer l'élément moulant dans sa configuration de moulage.

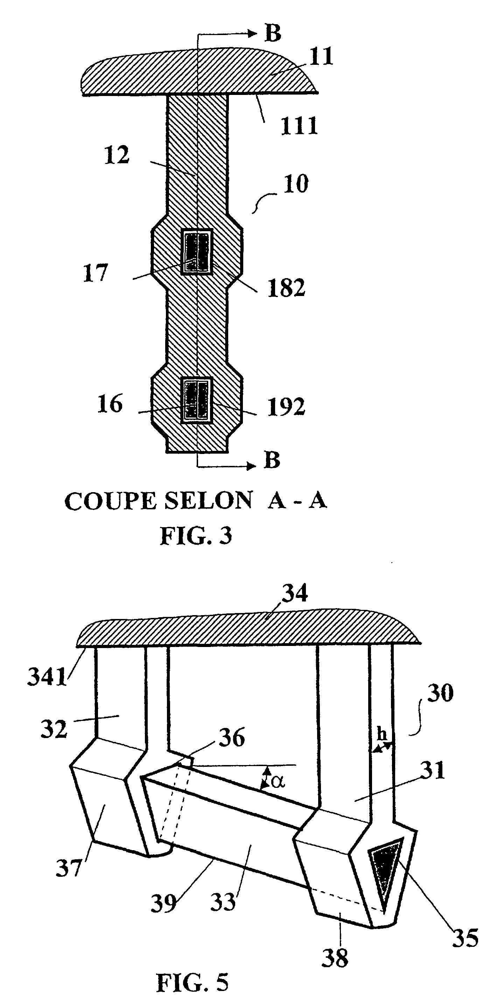

On a représenté à la figure **3** une coupe transversale de l'élément moulant réalisée selon une ligne **A-A** visible sur la figure **2.** Chaque passage **182, 192** de forme rectangulaire a des dimensions adaptées pour pouvoir y introduire par coulissement les clés **16, 17** avec un jeu réduit mais cependant suffisant. Le jeu prévu est limité pour réduire le plus possible la pénétration de mélange dans les passages pendant le moulage de la bande. Les passages **181, 182, 183** réalisés vers le milieu de la longueur des branches **13, 14, 15** du support **12** (comme ceux situés près des extrémités) sont disposés de façon à ce qu'une même clé **17** puisse être introduite simultanément dans lesdits trois passages de manière à délimiter avec le support **12** de l'élément moulant **10** deux orifices totalement clos **20**, **21** destinés à mouler deux éléments de liaison de section transversale rectangulaire. Enfin, après mise en place de la deuxième clé **16** dans les passages prévus **191, 192, 193** deux autres orifices **22, 23** totalement clos sont formés et délimités par les branches du support **12,** par la clé **17** et par la clé **16.**

Pendant le moulage d'une découpure dans une bande de gomme par l'élément moulant **10,** la gomme vient se mouler contre les parois dudit élément et remplit les orifices **20, 21, 22, 23** reliant ainsi les parois opposées de ladite incision.

Après moulage d'une découpure par l'élément moulant **10** dans sa configuration de moulage de la figure **2**, et avant de procéder au démoulage de l'élément moulant **10**, on procède au dégagement des clés **16**, **17** du support par glissement hors de leurs passages respectifs; ce mouvement de dégagement de chaque clé s'opère selon une direction qui est essentiellement différente de la direction de démoulage de la pièce de moule portant l'élément moulant. Pour réaliser ce mouvement de dégagement des clés, il est prévu des moyens non représentés sur la figure 4 montrant une étape intermédiaire dudit mouvement de dégagement en cours de réalisation.

Sur cette figure **4,** on a représenté l'élément moulant **10** selon une coupe **B-B** repérée sur la figure 3, ledit élément étant noyé dans la gomme après moulage d'une bande et avant la phase de démoulage dudit élément. On distingue, outre la formation de quatre éléments de liaison **24, 25, 26, 27,** les clés **16, 17** étant partiellement dégagées des branches **13, 14, 15** du support **12.** En poursuivant totalement le dégagement des clés **16**, **17**, les éléments de liaison en gomme formés ne sont plus en contact avec lesdites clés et le démoulage de l'élément moulant est alors possible de manière habituelle par déplacement des différentes pièces de moule. Dans l'exemple présenté, le déplacement des clés **16**, **17** s'effectue dans une direction qui est parallèle à la direction longitudinale de l'élément moulant **10** tandis que la direction de déplacement du support **12** est perpendiculaire à cette direction.

L'élément moulant qui vient d'être décrit peut de manière avantageuse être modifié de manière à obtenir un ou des orifices dont les sections transversales ont des formes variées pour mouler des éléments de liaison adaptés aux exigences de performances recherchées pour une bande de roulement pourvue d'une pluralité d'incisions et/ou de rainures de ce type. Bien entendu, les formes des supports et des clés peuvent également être adaptées de manière à mouler une forme particulière de découpure (les branches du support peuvent par exemple, être de largeur et/ou de longueur et/ou d'épaisseur différentes; les clés peuvent être, par exemple, de section transversale circulaire ou bien ovale).

La figure **5** montre une variante d'un élément moulant **30** selon l'invention comportant un support constitué de deux parties distinctes **31, 32** de hauteurs différentes et faisant saillie à la surface de moulage d'une pièce d'un moule **34**. Chacune des deux parties **31** et **32** du support, de forme rectangulaire et d'épaisseur **h**, comporte, à son extrémité la plus éloignée de la surface de moulage **341** du moule, un renflement **37, 38,** de forme générale externe triangulaire, percé d'un trou formant deux passages **35, 36** de section transversale triangulaire, lesdits passages **35, 36** étant destinés à la mise en place d'une clé **33** de section transversale triangulaire correspondant aux sections transversales des passages **35, 36** tout en ménagent un jeu approprié pour la mise en place des clés.

De manière préférentielle, la clé **33** de section transversale triangulaire est préférentiellement orientée de façon à ce que ladite clé, une fois en place, rentre en contact avec le mélange de gomme à mouler avec une arête 39 (ce qui permet de réduire l'effort nécessaire à la pénétration de l'élément moulant dans ledit mélange). En outre; et compte tenu de la différence de hauteur entre les deux parties **31** et **32** du support, la face supérieure de la clé **33** fait un angle α avec une direction tangente à la surface de la pièce du moule où est fixé l'élément moulant **30**.

Comme variante à ce dernier élément, il peut être prévu que l'un des passages **35** ou **36** ne débouche que sur un côté de l'une des parties **31** ou **32** et soit de dimension appropriée pour recevoir l'extrémité de la clé **33**; cette disposition réduit la quantité de gomme qui peut pénétrer dans ledit passage.

Dans cette variante d'élément moulant **30** selon l'invention, on obtient après moulage, une incision débouchant à la surface de roulement de la bande dont les parois principales sont reliées mécaniquement par un pont de gomme affleurant ladite surface de roulement. Il est ainsi possible d'obtenir une bande de roulement ayant à l'état neuf un grand nombre de découpures tout en conservant une rigidité maximale et ayant une longueur d'arêtes actives sensiblement augmentée après usure partielle atteignant la partie moulée par la clé **33**.

A l'usage, il a été constaté que le jeu nécessaire à la mise en place des clés dans les passages par simple glissement conduisait à la création de films de gomme (par film on entend une quantité de gomme d'épaisseur faible, c'est-à-dire au plus égale au jeu entre clé et passage). Ces films de gomme sont rompus au moins localement au moment du dégagement des clés et pendant le démoulage final de l'élément moulant, de sorte que la continuité de la découpure moulée ne s'en trouve pas affectée. Pour réduire encore la présence de ces films après démoulage, il est avantageux de prévoir, dans chaque passage de clé et sur chaque clé, des filetages permettant d'introduire chacune desdites clés par vissage pour réaliser l'assemblage de l'élément moulant. Cette disposition permet de réduire de façon sensible la quantité de gomme pouvant pénétrer dans chaque passage et facilite ainsi le dégagement de chaque clé en réduisant l'effort à appliquer sur chaque clé. En outre, le mouvement de rotation imposé à chaque clé pour le dévissage a pour effet de cisailler et donc de rompre les éventuels films formés entre chaque clé et les passages de clé.

Afin de faciliter encore le dégagement de chaque clé du support, il est avantageux de prévoir que chacune desdites clés est de forme tronconique (section transversale dont la surface diminue progressivement d'une extrémité à l'autre de ladite clé), les passages ayant également des formes tronconiques; en outre, cette disposition peut être combinée avec la présence sur chaque clé, au moins dans les zones correspondant à chaque passage, et dans chaque passage de filets permettant la mise en place desdites clés dans les passages par vissage et cela afin de rompre systématiquement les films de gomme formés pendant le moulage dans chaque passage.

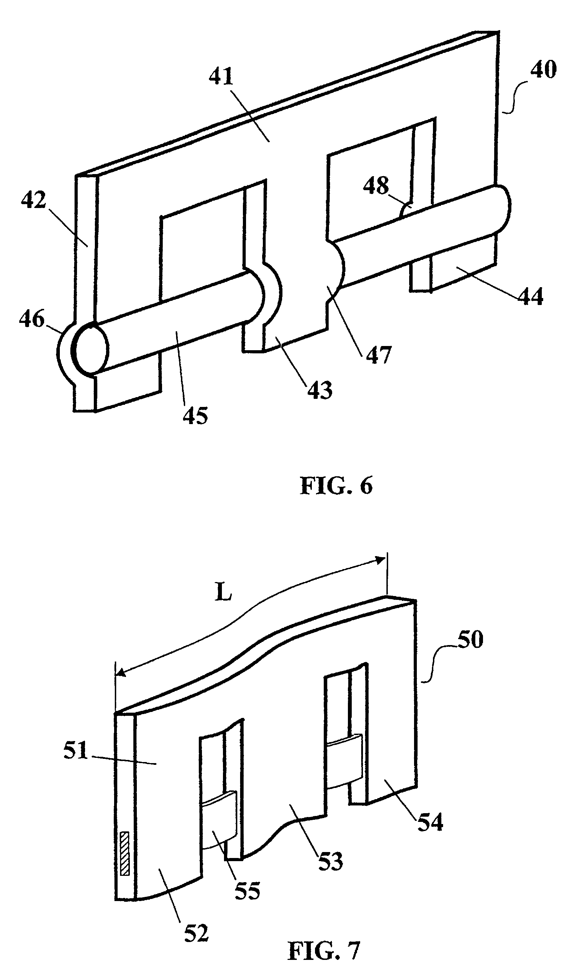

La figure **6** montre une autre variante d'élément moulant **40** selon l'invention comportant une première partie plane **41** prolongée par trois branches **42**, **43**, **44** sensiblement de même hauteur et de même épaisseur que la partie plane **41**. Chaque branche **42**, **43**, **44** comporte une déformation semi-cylindrique **46**, **47**, **48** située à proximité des extrémités de chacune desdites branches. Ces déformations **46, 47, 48** sont orientées de manière alternée, c'est-à-dire qu'une branche et sa suivante directe (suivant la direction longitudinale de l'élément) présentent des déformations dont les concavités sont orientées dans des sens opposés; de cette façon, il est réalisé trois passages, chacun d'eux n'étant pas complètement fermé, dans lesquels il est possible d'introduire avant moulage une clé **45** de section circulaire appropriée, ladite clé **45** étant maintenue en place par l'alternance des concavités des déformations **46**, **47**, **48** et éventuellement l'élasticité des branches **42**, **43**, **44** pendant la phase de pénétration dans le mélange de gomme. La géométrie semi-cylindrique des déformations n'est bien sûr pas une nécessité, toute autre forme géométrique adaptée à la forme des clés pouvant également convenir.

Dans une autre variante proche de celle représentée à la figure **6**, on peut prévoir qu'au moins une déformation (bien que non totalement fermée, à l'image de ce qui est montré sur les figures **3** et **5)** soit à même de résister aux efforts exercés par la gomme pendant l'opération de moulage pour maintenir en place une clé.

La figure **7** montre une autre variante d'un élément moulant 50 selon l'invention permettant de mouler une incision d'épaisseur moyenne faible devant l'épaisseur de la bande moulée et dont le tracé sur la surface de bande de roulement à l'état neuf et sur toute surface parallèle à la surface de ladite bande à l'état neuf prise dans l'épaisseur de ladite bande est de forme ondulée, ladite incision étant pourvue de deux éléments de liaison en gomme assurant une liaison mécanique entre les parois principales de ladite incision. L'élément moulant permettant de mouler cette incision comprend un support **51** comportant trois branches **52, 53, 54** ledit support étant formé dans une plaque métallique d'épaisseur constante et présentant des ondulations dans la direction longitudinale du support. Un passage est réalisé dans chacune des branches **52, 53, 54** de façon à pouvoir mettre en place une clé **55,** ladite clé suivant au mieux les ondulations du support **51.**

Pour cela, on prévoit d'utiliser, pour fabriquer la clé **55,** un matériau suffisamment flexible lorsqu'il se présente sous une faible épaisseur de façon à pouvoir engager ladite clé dans les passages prévus sur le support et la sortir des mêmes passages pour permettre, après moulage d'une incision, le démoulage de l'élément moulant. Un exemple de réalisation consiste à fabriquer la clé **55** sous forme d'une bande métallique mince et d'épaisseur inférieure à l'épaisseur des branches **52, 53, 54** du support et à la disposer sur chant de façon à pouvoir la déformer aisément pour la mettre en place dans les passages prévus dans les branches **52, 53, 54.** Dans cette disposition, la clé **55** résiste suffisamment aux efforts exercés par la gomme pendant la phase de pénétration de l'élément moulant dans la gomme de la bande de roulement.

Un autre exemple de réalisation consiste à utiliser un câble souple pour former la clé **55;** par câble, on entend soit un fil unique soit un assemblage de plusieurs fils.

Un mode de réalisation pratique permettant la mise en place dans le support et le dégagement des clés après le moulage d'une bande consiste par exemple à prévoir, sur le moule et de part et d'autre de l'élément moulant, des nervures sur lesquelles prend appui ledit élément et à l'intérieur desquelles sont, en outre, prévus des logements de dimensions adéquates permettant de venir loger lesdites clés à l'aide de moyens appropriés.

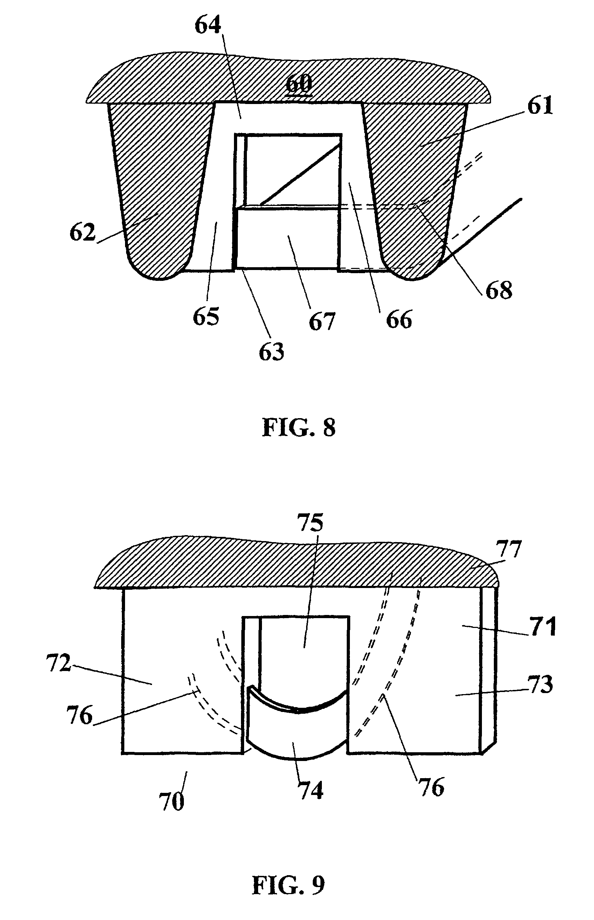

La figure **8** montre une réalisation selon cette dernière variante permettant la mise en place d'une clé dans un support et à son dégagement. Sur cette figure **8,** on voit une partie de moule **60** comportant deux nervures **61, 62** destinées à mouler deux rainures dans une bande de roulement d'un pneumatique et, placée entre lesdites deux nervures **61, 62,** un élément moulant **63** conforme à l'invention et comportant un support **64** prenant appui à la fois sur la surface de moulage du moule **60** et sur les deux nervures **61, 62**. Le support **64** est pourvu de deux branches **65, 66** disposées de manière à prendre appui sur les nervures **61, 62,** et lesdites branches comportant des passages aménagés près de leurs extrémités. Avec ce support **64** est assemblée une clé **67** pour réaliser l'élément moulant **63**. La particularité de cette variante d'élément moulant, représenté sur cette figure **8**, est qu'il est prévu, dans le prolongement du passage réalisé sur la branche **66**, un logement **68** (représenté en traits pointillés) dans la nervure **61** adjacente à l'élément moulant **63**, ledit logement **68** étant fonctionnellement prévu pour permettre le dégagement de la clé **67** à l'intérieur de la nervure **61** en suivant un mouvement de rotation autour d'un axe sensiblement perpendiculaire à la surface du moule. Des moyens non représentés sont également prévus pour réaliser le mouvement de mise en place et de dégagement de la clé **67**.

De manière avantageuse, il est également possible de réaliser le dégagement de chaque clé à l'intérieur même d'une partie formant le support d'un élément moulant selon l'invention. Un exemple d'une telle réalisation est représenté à la figure **9** qui montre un élément moulant **70** dans sa configuration de moulage formé d'un support **71** comportant deux branches **72, 73** et d'une clé **74** dont une partie est visible entre les deux branches **72, 73** pour former un orifice **75**. Sur cette figure **9**, on a représenté en traits pointillés un logement **76** réalisé à l'intérieur des branches du support **71**, ledit logement **76** se prolongeant jusque dans le moule **77** pour permettre de recevoir en totalité la clé **74** au moment de l'opération de désassemblage. Dans la variante présentée à la figure **9**, le déplacement de la clé **74** à l'intérieur de son logement **76** suit une trajectoire sensiblement circulaire autour d'un axe de rotation perpendiculaire à un plan contenant la direction longitudinale et transversale de l'élément moulant. Des moyens, non représentés ici, sont en outre prévus pour pouvoir actionner la clé **74** et ainsi soit la mettre en place dans le support **71** pour former l'élément moulant **70** avant moulage soit la déplacer pour permettre le démoulage.

Une autre variante de ce dernier élément moulant placé entre deux nervures de moule consiste à réaliser un support constitué uniquement d'une branche prenant appui sur une desdites nervures, ladite branche comportant au moins un passage pour une clé, ladite clé une fois en place pour le moulage reliant la branche à la deuxième desdites nervures aménagée pour recevoir l'extrémité de ladite clé.

D'une manière générale, l'élément moulant selon l'invention peut aussi bien être employé dans un moule de moulage et vulcanisation d'une bande de roulement en gomme seule que dans un moule de moulage d'un pneumatique pourvu d'une bande de roulement.

Un avantage de l'élément moulant selon l'invention réside dans la facilité avec laquelle il est possible de changer une ou plusieurs clés dudit élément, par exemple après une utilisation intense nécessitant un remplacement, sans avoir à changer en totalité ledit élément.

Bien entendu, tous les exemples d'éléments moulants selon l'invention qui ont été décrits peuvent être prévus pour avoir une forme moyenne en zigzag ou ondulée dans la direction de leur hauteur, c'est-à-dire selon l'épaisseur de la bande moulée.

## Revendications

1. Procédé de moulage d'une bande de roulement en gomme pourvue d'au moins une découpure dont les parois principales (4, 5) comportent au moins un élément de liaison (6, 7, 8, 9), ledit procédé employant un moule comportant plusieurs pièces de moule, chaque pièce de moule pouvant être animée d'un mouvement de fermeture et d'ouverture selon une direction propre sensiblement perpendiculaire à la surface de moulage de ladite pièce de moule et l'une au moins desdites pièces de moule comprenant au moins un élément moulant (10) faisant saillie à la surface de moulage de ladite pièce de moule, ledit élément moulant comportant au moins un orifice (20, 21, 22, 23) pour mouler au moins un élément de liaison, le procédé de l'invention comprenant les étapes suivantes :
- on réalise l'élément moulant 10 en au moins deux parties distinctes, une partie formant le support de l'élément et au moins une autre partie formant une clé de l'élément;
- on positionne et on fixe la partie formant le support de l'élément moulant (10) sur une pièce du moule de moulage du pneumatique de façon à ce que ledit support fasse saillie sur la surface de moulage de ladite pièce de moule;
- on constitue l'élément moulant (10) dans la configuration de moulage en assemblant chaque clé avec le support dudit élément;
- on ferme le moule en déplaçant chaque pièce de moule selon sa direction de fermeture;
- on moule alors la bande de gomme;
- on dégage chaque clé du support de l'élément moulant (10);
- on extrait le support en déplaçant chaque pièce de moule selon sa direction d'ouverture opposée à la direction de fermeture.

2. Procédé selon la revendication **1 caractérisé en ce que** chaque clé pour être dégagée du support de l'élément moulant est déplacée dans une direction différente de la direction de fermeture/ouverture de la pièce de moule portant ledit élément.

3. Élément moulant (**10**) destiné à mouler un motif de découpure dans une bande de roulement en gomme, ladite découpure présentant au moins deux parois principales en vis-à-vis reliées par au moins un élément de liaison en gomme, ledit élément moulant (**10**) comportant au moins un orifice (**20, 21, 22, 23**) pour mouler chacun desdits éléments de liaison pendant le moulage de la bande, l'élément moulant (**10**) étant constitué par l'assemblage d'une première partie formant le support (**12**) de élément destiné à faire saillie à la surface de moulage (**111**) d'une pièce (**11**) d'un moule et par une deuxième partie constituée par une ou plusieurs pièces formant chacune une clé (**16, 17**), l'élément moulant (**10**) étant **caractérisé en ce que** chaque clé est amovible par rapport au support de l'élément pour permettre le démoulage.

4. Élément moulant **(10)** selon la revendication **3 caractérisé en ce que** chaque clé **(16, 17)** délimitant au moins partiellement un orifice **(20, 21, 22, 23)** de l'élément moulant **(10)** peut être déplacée suivant une direction sensiblement différente de la direction de fermeture/ouverture de la pièce **(11)** de moule portant ledit élément pour permettre le démoulage dudit élément **(10)** sans rupture des éléments de liaison formés.

5. Élément moulant **(10)** selon la revendication **4 caractérisé en ce que** chaque clé **(16, 17)** délimitant au moins partiellement un orifice **(20, 21, 22, 23)** de l'élément moulant **(10)** peut être déplacée suivant une direction sensiblement perpendiculaire à la direction de fermeture/ouverture de la pièce (**11**) de moule portant ledit élément pour permettre le démoulage dudit élément (**10**) sans rupture des éléments de liaison formés.

6. Élément moulant (**10**) selon la revendication 4 ou la revendication **5 caractérisé en ce que** le support **(12)** comporte au moins un passage **(181, 182, 183, 191, 192, 193)** destiné à la mise en place d'une clé **(16, 17)** pour constituer ledit élément moulant **(10)** avant moulage.

7. Élément moulant **(10)** selon la revendication 6 **caractérisé en ce qu'**au moins un passage **(181, 182, 183, 191, 192, 193)** est pourvu d'un filetage pour permettre le montage d'une clé **(16, 17)** par vissage dans ledit passage réduisant ainsi la quantité de gomme moulée dans le passage.

8. Élément moulant (**30**) selon l'une des revendications **3** à **7 caractérisé en ce que** le support dudit élément est constitué d'au moins deux parties distinctes (**31, 32**) chaque partie étant fixée à une pièce de moule.

9. Élément moulant selon l'une des revendications **3** à **8 caractérisé en ce qu'**au moins une clé présente une section transversale qui varie d'une extrémité de ladite clé à l'autre pour faciliter l'opération de dégagement de ladite clé du support.

10. Élément moulant selon l'une des revendications **3** à **9 caractérisé en ce qu'**au moins une clé fait un angle α différent de zéro avec une direction tangente à la surface de moulage du moule.

11. Élément moulant (**50**) selon l'une des revendications **3** à **10 caractérisé en ce que** la trace de la découpure, à la surface de la bande de roulement, moulée par ledit élément a une forme ondulée et **en ce que** chaque clé **(55)** est réalisée de manière à présenter une flexibilité suffisante pour pouvoir être mise en place sur le support (**51**) avant moulage et être enlevée pour effectuer le démoulage dudit élément moulant.

12. Élément moulant **(40)** selon l'une des revendications **3** à **11 caractérisé en ce que** le support **(41)** comporte au moins deux branches **(42, 43, 44)** ayant chacune au moins une déformation (**46, 47, 48)** présentant une concavité, lesdites déformations ayant leurs concavités orientées de façon alternée pour permettre la mise en place et le maintien d'au moins une clé (45) de section appropriée pour constituer ledit élément moulant.

13. Élément moulant selon l'une des revendications **3** à **12 caractérisé en ce que** le mouvement de mise en place et de dégagement d'au moins une clé s'effectue en suivant une trajectoire sensiblement circulaire.

14. Élément moulant (**63**) selon l'une des revendications **3** à **13 caractérisé en ce qu'**il est prévu des moyens de logement (**68**) d'au moins une clé (**67**) à l'intérieur d'au moins un élément de relief (**61**) faisant saillie à la surface de moulage du moule.

15. Élément moulant **(70)** selon l'une des revendications **3** à **13 caractérisé en ce qu'**il est prévu un logement **(76)** à l'intérieur du support (**71**) pour recevoir au moins en partie une clé **(74)** pendant le mouvement de dégagement de ladite clé.

16. Élément moulant selon l'une des revendications **3** à **15 caractérisé en ce qu'**une clé au moins est composée d'un câble.

17. Moule pour mouler une bande de roulement d'un pneumatique comportant au moins un élément moulant défini selon l'une des revendications **3** à **16.**

## Patentansprüche

1. Verfahren zum Abformen einer Lauffläche aus Gummi, die mit mindestens einem Ausschnitt versehen ist, dessen Hauptwände (4, 5) mindestens ein Verbindungselement (6, 7, 8, 9) aufweisen, wobei das genannte Verfahren ein Formwerkzeug verwendet, das mehrere Formwerkzeug-Stücke aufweist, jedes Formwerkzeug-Stück zu einer Schließ- und Öffnungsbewegung in einer eigenen Richtung angetrieben werden kann, die etwa senkrecht zur Abformoberfläche des genannten Formwerkzeug-Stücks verläuft, mindestens das eine der genannten Formwerkzeug-Stücke mindestens ein Formelement (10) aufweist, das an der Abformoberfläche des genannten Formwerkzeug-Stücks übersteht, das genannte Formelement mindestens eine Öffnung (20, 21, 22, 23) aufweist, um mindestens ein Verbindungselement abzuformen, und das Verfahren der Erfindung die folgenden Schritte aufweist:
- man stellt das Formelement (10) aus mindestens zwei gesonderten Teilen her, von denen ein Teil den Träger des Elements und mindestens ein anderes Teil einen Schieber des Elements bildet;
- auf einem Stück des Formwerkzeugs zum Abformen des Reifens positioniert man das den Träger bildende Teil des Formelements (10) und legt es fest, so daß der genannte Träger auf der Abformoberfläche des genannten Formstücks einen Vorsprung bildet;
- man bildet das Formelement (10) in der Abformausbildung, indem man jeden Schieber mit dem Träger des genannten Elements zusammensetzt;
- man schließt das Formwerkzeug, indem man jedes Formwerkzeug-Stück in seiner Schließrichtung versetzt;
- man formt nun das Band bzw. die Lauffläche aus Gummi ab;
- man löst den Eingriff eines jeden Schiebers des Trägers des Formelements (10); und
- man entfernt den Träger, indem man jedes Formwerkzeug-Stück in seiner Öffnungsrichtung bewegt, die der Schließrichtung entgegengesetzt ist.

2. Verfahren nach Anspruch 1, **dadurch gekennzeichnet, daß** jeder Schieber zum Lösen seines Eingriffs mit dem Träger des Formelements in einer Richtung versetzt wird, die sich von der Schließ-/Öffnungsrichtung des Formwerkzeug-Stücks, das das genannte Element trägt, unterscheidet.

3. Formelement (10), das dazu bestimmt ist, ein Ausschnittmuster in einer Lauffläche aus Gummi abzuformen, wobei der genannte Ausschnitt mindestens zwei einander gegenüberliegende Hauptwände aufweist, die durch mindestens ein Verbindungselement aus Gummi verbunden sind, das genannte Formelement (10) mindestens eine Öffnung (20, 21, 22, 23) aufweist, um jedes der genannten Verbindungselemente während des Abformens der Lauffläche abzuformen, das Formelement (10) vom Zusammenbau eines ersten Teiles, das den Träger (12) des Elements bildet, das dazu bestimmt ist, einen Vorsprung auf der Abformoberfläche (111) eines Stücks (11) eines Formwerkzeugs zu bilden, und eines zweiten Teiles gebildet ist, das durch ein oder mehrere Stücke gebildet wird, die jeweils einen Schieber (16, 17) bilden, und das Formelement (10) **dadurch gekennzeichnet ist, daß** jeder Schieber bezüglich des Trägers des Elements lösbar ist, um das Ausformen zu gestatten.

4. Formelement (10) nach Anspruch 3, **dadurch gekennzeichnet, daß** jeder Schieber (16, 17), der mindestens teilweise eine Öffnung (20, 21, 22, 23) des Formelements (10) begrenzt, in einer Richtung versetzt werden kann, die sich im wesentlichen von der Schließ-/Öffnungsrichtung des Formwerkzeug-Stücks (11) unterscheidet, das das genannte Element trägt, um das Ausformen des genannten Elements (10) ohne Abreißen der abgeformten Verbindungselemente zu gestatten.

5. Formelement (10) nach Anspruch 4, **dadurch gekennzeichnet, daß** jeder Schieber (16, 17), der mindestens teilweise eine Öffnung (20, 21, 22, 23) des Formelements (10) begrenzt, in einer Richtung versetzt werden kann, die sich im wesentlichen senkrecht auf der Schließ-/Öffnungsrichtung des Formwerkzeug-Stücks (11) steht, das das genannte Element trägt, um das Ausformen des genannten Elements (10) ohne Abreißen der abgeformten Verbindungselemente zu gestatten.

6. Formelement (10) nach Anspruch 4 oder Anspruch 5, **dadurch gekennzeichnet, daß** der Träger (12) mindestens einen Durchlaß (181, 182, 183, 191, 192, 193) aufweist, der zum Einsetzen eines Schiebers (16, 17) bestimmt ist, um vor dem Abformen das genannte Formelement (10) zu bilden.

7. Formelement (10) nach Anspruch 6, **dadurch gekennzeichnet, daß** mindestens ein Durchlaß (181, 182, 183, 191, 192, 193) mit einem Gewinde versehen ist, um die Montage eines Schiebers (16, 17) durch Verschraubung im genannten Durchlaß zu gestatten, was so die Menge an Gummi verringert, der im Durchlaß abgeformt wird.

8. Formelement (30) nach einem der Ansprüche 3 bis 7, **dadurch gekennzeichnet, daß** der Träger des genannten Elements von mindestens zwei gesonderten Teilen (31, 32) gebildet ist, wobei jedes Teil an einem Formwerkzeug-Stück befestigt ist.

9. Formelement nach einem der Ansprüche 3 bis 8, **dadurch gekennzeichnet, daß** mindestens ein Schieber einen Querschnitt aufweist, der sich von einem Ende des genannten Schiebers zum anderen ändert, um den Vorgang des Lösens des genannten Schiebers aus dem Eingriff mit dem Träger zu erleichtern.

10. Formelement nach einem der Ansprüche 3 bis 9, **dadurch gekennzeichnet, daß** mindestens ein Schieber einen Winkel α, der sich von Null unterscheidet, mit einer Richtung bildet, die die Abformoberfläche des Formwerkzeugs tangiert.

11. Formelement (50) nach einem der Ansprüche 3 bis 10, **dadurch gekennzeichnet, daß** die Spur des Ausschnitts, an der Oberfläche der Lauffläche, die durch das genannte Element abgeformt wurde, eine gewellte Form hat, und daß jeder Schieber (55) derart hergestellt ist, daß er eine Flexibilität aufweist, die ausreicht, damit er auf dem Träger (51) vor dem Abformen eingesetzt und wieder herausgenommen werden kann, um das Ausformen des genannten Formelements zu gestatten.

12. Formelement (40) nach einem der Ansprüche 3 bis 11, **dadurch gekennzeichnet, daß** der Träger (41) mindestens zwei Verzweigungen (42, 43, 44) aufweist, von denen jede mindestens eine Verformung (46, 47, 48) hat, die eine Einbuchtung bildet, wobei die genannten Verformungen mit ihren Einbuchtungen alternierend ausgerichtet sind, um das Einsetzen und den Halt mindestens eines Schiebers (45) mit geeignetem Querschnitt zu gestatten, um das genannte Abformelement zu bilden.

13. Formelement nach einem der Ansprüche 3 bis 12, **dadurch gekennzeichnet, daß** die Bewegung des Einsetzens und des Lösens mindestens eines Schiebers aus dem Eingriff bewirkt wird, indem man einer etwa kreisförmigen Bewegungsbahn folgt.

14. Formelement (63) nach einem der Ansprüche 3 bis 13, **dadurch gekennzeichnet, daß** Mittel (68) zum Sitz mindestens eines Schiebers (67) im Inneren mindestens eines erhabenen Elements (61) vorgesehen sind, das auf der Abformoberfläche des Formwerkzeugs vorspringt.

15. Formelement (70) nach einem der Ansprüche 3 bis 13, **dadurch gekennzeichnet, daß** ein Sitz (76) im Inneren des Trägers (71) vorgesehen ist, um einen Schieber (74) während der Bewegung des Lösens des Eingriffes des genannten Schiebers aufzunehmen.

16. Formelement nach einem der Ansprüche 3 bis 5, **dadurch gekennzeichnet, daß** mindestens ein Schieber aus einem Seil zusammengesetzt ist.

17. Formwerkzeug zum Abformen einer Lauffläche eines Luftreifens, mit mindestens einem Formelement, das gemäß einem der Ansprüche 3 bis 16 definiert ist.

## Claims

1. A process for moulding of a rubber tread provided with at least one cutout, whose main walls (4, 5) comprise at least one connecting element (6, 7, 8, 9), said process using a mould comprising several mould pieces, each mould piece being capable of being driven in a closing and opening motion in its own direction substantially perpendicular to the moulding surface of said mould piece and at least one of said mould pieces comprising at least one moulding element (10) projecting from the moulding surface of said mould piece, said moulding element comprising at least one opening (20, 21, 22, 23) for moulding at least one connecting element, the process of the invention comprising the following steps:
- the moulding element (10) is made in at least two separate parts, one part forming the support of the element and at least one other part forming a key of the element;
- the part forming the support of the moulding element (10) is positioned and fastened on a piece of the tyre moulding mould so that said support projects from the moulding surface of said mould piece;
- the moulding element (10) is constituted in the moulding configuration by assembling each key with the support of said element;
- the mould is closed by moving each mould piece in its closing direction;
- the rubber tread is then moulded;
- each key is disengaged from the support of the moulding element (10);
- the support is extracted by moving each mould piece in its opening direction opposite the closing direction.

2. A process according to claim 1, **characterised in that** each key, in order to be disengaged from the support of the moulding element, is moved in a direction different from the closing/opening direction of the mould piece bearing said element.

3. A moulding element (10) for moulding a cutout pattern in a rubber tread, said cutout having at least two main opposite walls joined by at least one rubber connecting element, said moulding element (10) having at least one opening (20, 21, 22, 23) for moulding each of said connecting elements during moulding of the tread, the moulding element (10) comprising an assembly of a first part forming a support (12) of the element intended to project from the moulding surface (111) of a piece (11) of a mould and of a second part constituted by one or more pieces, each forming a key (16, 17), the moulding element (10) being **characterised in that** each key is removable from the support of the element in order to permit stripping of the mould.

4. A moulding element (10) according to claim 3, **characterised in that** each key (16, 17) at least partially defining an opening (20, 21, 22, 23) in the moulding element (10) can be moved in a direction substantially different from the closing/opening direction of the mould piece (11) bearing said element in order to permit the stripping of said element (10) without breaking of the connecting elements formed.

5. A moulding element (10) according to claim 4, **characterised in that** each key (16, 17) at least partially defining an opening (20, 21, 22, 23) in the moulding element (10) can be moved in a direction substantially perpendicular to the closing/opening direction of the mould piece (11) bearing said element in order to permit the stripping of said element (10) without breaking of the connecting elements formed.

6. A moulding element (10) according to claim 4 or claim 5, **characterised in that** the support (12) comprises at least one passage (181, 182, 183, 191, 192, 193) for placement of a key (16, 17) in order to constitute said moulding element (10) before moulding.

7. A moulding element (10) according to claim 6, **characterised in that** at least one passage (181, 182, 183, 191, 192, 193) is provided with threading to permit the mounting of a key (16, 17) by screwing into said passage, thus reducing the quantity of rubber moulded in the passage.

8. A moulding element (30) according to one of claims 3 to 7, **characterised in that** the support of said element consists of at least two separate parts (31, 32), each part being fastened to a mould piece.

9. A moulding element according to one of claims 3 to 8, **characterised in that** at least one key has a cross-section which varies from one end of said key to the other in order to facilitate the operation of disengagement of said key from the support.

10. A moulding element according to one of claims 3 to 9, **characterised in that** at least one key forms an angle α other than zero with a direction tangent to the moulding surface of the mould.

11. A moulding element (50) according to one of claims 3 to 10, **characterised in that** the cutout outline on the tread surface moulded by said element has a wavy shape and each key (55) is made with sufficient flexibility to be set in place on the support (51) before moulding and to be removed in order to strip said moulding element.

12. A moulding element (40) according to one of claims 3 to 11, **characterised in that** the support (41) comprises at least two branches (42, 43, 44), each having at least one deformation (46, 47, 48) having a concavity, said deformations having their concavities alternately oriented to permit the placement and holding of at least one key (45) of appropriate section for forming said moulding element.

13. A moulding element according to one of claims 3 to 12, **characterised in that** the movement of placement and disengagement of at least one key is carried out by following a substantially circular path.

14. A moulding element (63) according to one of claims 3 to 13, **characterised in that** housing means (68) for at least one key (67) within at least one relief element (61) projecting from the moulding surface of the mould are provided.

15. A moulding element (70) according to one of claims 3 to 13, **characterised in that** a housing (76) is provided inside the support (71) in order to receive a key (74) at least partially during the movement of disengagement of said key.

16. A moulding element according to one of claims 3 to 15, **characterised in that** at least one key is formed of a cable.

17. A mould for a tyre tread comprising at least one moulding element defined according to one of claims 3 to 16.
